# NEUE EUROPÄISCHE PATENTSCHRIFT

(11) **EP 0 334 002 B2**
(45) Veröffentlichungstag und Bekanntmachung des Hinweises auf die Entscheidung über den Einspruch: **25.09.2002**
(45) Hinweis auf die Patenterteilung: 30.08.1995
(21) Anmeldenummer: 89101839.2
(22) Anmeldetag: 02.02.1989
(51) Int. Cl.: B23G 1/34, B23G 5/18, B23G 5/20

(54) **Gewindefräser**
Thread milling cutter
Fraise de filetage

(30) Priorität: 16.03.1988 DE 3808797
(43) Veröffentlichungstag der Anmeldung: 27.09.1989
(73) Patentinhaber: Prototyp-Werke GmbH, 77736 Zell (DE)
(72) Erfinder: Giessler, Josef, Dipl.-Ing. (FH), D-7615 Zell-Harmersbach (DE)
(74) Vertreter: Weber, Dieter, Dr.

(56) Entgegenhaltungen:
- EP-A- 0 237 035
- WO-A-88/05361
- DE-A- 3 627 798
- GB-A- 1 500 380

## Beschreibung

Die Erfindung betrifft ein Verfahren zum Einbringen einer Gewinde-Sackbohrung mittels einem Gewindefräser gemäß Anspruch 1 und einen Gewindefräser gemäß Anspruch 2.

Ein solcher Gewindefräser ist durch die US-PS 4 651 374 bekannt und ist wie ein Bohrer ausgebildet, mit einer von zwei Schneiden gebildeten Bohrerspitze und vier spiralig verlaufenden Spannuten an der Außenfläche des Werkzeugs, von denen zwei von den Umfangsrändern der Schneiden ausgehen und die anderen axial nach hinten versetzt auslaufen. Im Gegensatz zu einem Bohrer sind jedoch die von den Spannuten getrennten spiraligen Umfangsbereiche des Werkzeugs mit hinterschliffenen, zahnartigen Schneidstollen versehen, die etwa in Umfangsrichtung des Werkzeugs verlaufen.

Die beiden Bohrerschneiden an der Spitze des Werkzeugs sind um einen von der Seite des Werkzeugs her gemessenen Winkel zueinander geneigt, der beispielsweise 120° betragen kann; die beiden Schneidkanten sind Erzeugende einer Kegelfläche.

Das von der Bohrerspitze abgewandte Ende des bekannten Gewindefräsers weist bevorzugt einen vergrößerten Durchmesser auf und ist zum Einspannen in eine Werkzeugmaschine eingerichtet.

Es ist der Zweck des bekannten Gewindefräsers, auf eine möglichst einfache und rationelle Weise ein Gewinde-Sackloch herzustellen. Zu diesem Zweck wird der Gewindefräser zunächst wie ein Bohrer in Drehung um seine Längsachse versetzt und in das mit dem Gewinde-Sackloch zu versehende Material abgesenkt, bis die angestrebte Bohrlochtiefe erreicht ist.

Dann wird das Werkzeug leicht abgehoben, so daß seine Spitze nicht mehr vom kegelig vertieften Bohrlochgrund zentriert ist, und es wird in eine solche Drehung versetzt, daß die Umfangsgeschwindigkeit der erforderlichen Schnittgeschwindigkeit an den Schneidstollen entspricht. Nun wird das Werkzeug unter stets aufrechterhaltener, paralleler Ausrichtung zur Bohrlochachse gegenüber dieser um die Tiefe der zu erzielenden Gewindegänge seitlich versetzt, wonach das Werkzeug mit seiner Mittelachse einer kreisförmigen Bahnkurve folgt, deren Radius der erwähnten seitlichen Versetzung entspricht. Auf diese Weise legt das Werkzeug eine Bahn von mindestens 360° zurück. Gleichzeitig wird das Werkzeug um das Maß der Gewindesteigung gleichmäßig angehoben. Nun ist über die gesamte Bohrlochlänge ein fertiges Sacklochgewinde gefräst. Der Fräser muß jetzt nur wieder auf das Bohrloch zentriert werden und kann dann aus dem Bohrloch herausgezogen werden.

Auf diese Weise ist es mittels einer Spezial-Gewindefräsmaschine bereits gelungen, in Aluminium mit einer einzigen Spindel und somit einem einzigen Gewindefräser pro Minute mehr als 120 Sacklöcher zu bohren und mit einem Innengewinde zu versehen. Der Gewindeeinlauf dieser Sacklöcher weist aber unvermeidlich einen Grat auf, der beim Eindrehen von Gewindebolzen zwischen Außenund Innengewinde geraten kann, das Eindrehen des Gewindebolzens hemmt und zu Schäden am Gewinde führt. Das Entgraten aber ist maschinell meist nicht in befriedigender Weise möglich und geschieht meist von Hand, wodurch der Vorteil des raschen Bohr- und Gewindeschneidevorgangs wieder teilweise zunichte gemacht wird, der durch den bekannten Fräser erreicht wurde.

Die auf diese Weise hergestellten Gewinde-Sacklöcher haben außerdem am Bohrlochgrund den üblichen, über den untersten Gewindegang hinausreichenden Bohrerauslauf, so daß das Sackloch selbst tiefer ist als die erzielbare Einschraubtiefe. Manchmal wäre es aber vorteilhaft, wenn sich die Gewindegänge bis zum Bohrlochgrund erstrekken würden. Die Herstellung eines solchen Gewinde-Sackloches ist jedoch außerordentlich aufwendig, muß mit speziell geschliffenen Gewindebohrern durchgeführt werden und wird daher, wo immer nur möglich, vermieden, so daß ein solches Gewindesacklock in Studienarbeiten beilngenieursausbildung als Konstruktionsfehler gilt, wenn nicht besondere Umstände eine solche Sacklochkonstruktion zwingend erfordern.

An eine Serienfertigung solcher Sacklöcker und gar mit der oben beschriebenen Fertigungsgeschwindigkeit ist nicht zu denken.

Ein weiterer Nachteil der bekannten Gewindefräser liegt darin, daß man praktisch für jeden Gewinde-Nenndurchmesser ein eigenes Werkzeug benötigt. Dies erfordert aber gerade bei Feingewindebohrungen mit verhältnismäßig großem Durchmesser die Bereitstellung einer großen Anzahl teuerer Gewindefräser.

Ausgehend von dieser Problemlage liegt der Erfindung die Aufgabe zugrunde, den eingangs genannten, bekannten Gewindefräser dahingehend weiterzubilden, daß er zum Fräsen von bevorzugt gratfreien Sacklöchern mit größtmöglicher Einschraubtiefe sowie mit einem Durchmesser zu ermöglichen, der nicht nur dem Nenndurchmesser (Außendurchmesser des Gewindefräsers zuzüglich der zweifachen Ganghöhe) entspricht, sondern auch beliebig größer sein kann, so daß es möglich ist, mit ein und demselben Gewindefräser Gewinde-Sacklöcher herzustellen, die zwar die gleiche Steigung, aber stark unterschiedliche Durchmesser aufweisen sowie bevorzugt einen gratfreien Gewindeeinlauf aufweisen. Es wird auch ein Verfahren angestrebt, durch welches mindestens eines der genannten Ziele erreichbar ist.

Diese Aufgabe wird durch die Merkmale der Ansprüche 1 und 2 gelöst.

Hierbei ist das erfindungsgemäße Werkzeug nicht, wie das bekannte, als Bohrer, sondern vielmehr als Stirnfräser ausgebildet, wobei die Stirnschneiden miteinander einen Winkel einschließen, der größer als 180° ist beträgt. Das erfindungsgemäße Werkzeug kann somit nach Erreichen der gewünschten Bohrlochtiefe unmittelbar seitlich um ein beliebiges Maß versetzt werden, wonach das Werkzeug seine kreisförmige Bahnkurve zurücklegt und hierbei um das Maß der Steigung angehoben wird. Es ist auch möglich, das Werkzeug um ein verhältnismäßig geringes Maß seitlich zu versetzen, im Grenzfall nur um das Maß der Ganghöhe.

Beim Fräsen wird der in einem einzigen Umlauf erzielbare Gewindedurchmesser lediglich dadurch beschränkt, daß die seitliche Versetzung von Gewindfräserachse und Bohrlochachse nicht mehr als höchstens den Außendurchmesser des Gewindefräsers betragen darf, da sonst kein Bohrloch, sondern eine Kreisnut gefräst wird. Grundsätzlich ist es aber möglich, durch mehrere Werkzeugumläufe letztlich ein Gewinde-Sackloch mit praktisch unbegrenztem Durchmesser zu fräsen. Dies ist besonders für die optische und feinmechanische Industrie wichtig, in der präzise Fein-Innengewinde mit verhältnismäßig großem Durchmesser hergestellt werden müssen.

Der Stirnwinkel der Stirnfräserschneiden beträgt gemäß der Erfindung mehr als 180°, so daß das erfindungsgemäße Werkzeug eine flache Hohlspitze aufweist, die zur Selbstzentrierung des Werkzeuges beiträgt. Der Bohrlochgrund weist somit eine flache, kegelige Erhebung auf, die aber beim seitlichen Versetzen des rotierenden Werkzeugs durch die Stirnfräserschneiden sofort abgetragen wird und somit diese seitliche Versetzung nicht behindert.

Es ist grundsätzlich möglich, mit dem erfindungsgemäßen Werkzeug ein Gewinde zu fräsen, dessen Gang sich bis zum flachen Bohrlochgrund erstreckt. Da sich am Bohrlochgrund aber selbst nach dem Ausblasen mit Preßluft Schmutz ansammeln kann, ist es gemäß einer bevorzugten Ausgestaltung der Erfindung von Vorteil, an dem der Werkzeugspitze zugewandten Ende der Gewindefräserschneiden anstelle eines zahnartigen Schneidstollens eine längliche Umfangsschneide vorzusehen, deren Länge bevorzugt das ein- bis zweifache der Gewindesteigung beträgt. Durch diese Umfangsschneiden wird am Bohrlochgrund eine einen Freistich bildende Umfangsnut gebildet, in die der hergestellte Gewindegang ausläuft. Somit ist es möglich, eine Schraube bis auf den Bohrungsgrund einzudrehen.

Gemäß einer weiteren, bevorzugten und besonders wesentlichen Ausgestaltung der Erfindung weist die untere Umfangskante des Fräsers eine schneidende Abschrägung auf, die bevorzugt als radial hinterschliffener Kantenbruch am übergang zwischen einer Stirnfräserschneide und einer Umfangsschneide ausgebildet ist.

Mittels dieser Ausbildung ist es möglich, in jene Werkstückoberfläche, in welche ein Gewinde-Sackloch eingebracht werden soll, zunächst eine angesenkte Vertiefung einzufräsen, deren Durchmesser so auf das herzustellende Innengewinde abgestimmt ist, daß dieses in die Ansenkung einläuft. Hierbei wird der Fräser außermittig eingestellt und durchläuft eine Kreisbahn. Nachfolgend wird auf die oben beschriebene Weise das Sackloch gebohrt und das Gewinde gefräst. Wie sich gezeigt hat, wird so das Auftreten eines Grates am Gewindeeinlauf verhindert.

Es ist grundsätzlich auch möglich, mit dem weitergebildeten erfindungsgemäßen Fräser das hergestellte Gewindeloch nachträglich am Einlauf anzusenken, doch wird bei diesem Verfahren ein kleiner Grat stets unvermeidbar sein.

Die Erfindung bezieht sich ausdrücklich nicht nur auf den beanspruchten Gewindefräser, sondern auch auf das beanspruchte Verfahren zum Fräsen einer Gewindebohrung, deren Durchmesser grösser ist als der Nenndurchmesser des Gewindefräsers.

Die von den Stirnfräserschneiden gelösten Späne werden durch Spannuten wie bei einem Bohrer aus dem Bohrloch abgeführt. Gemäß einer bevorzugten Ausgestaltung der Erfindung sind aber die am Bohrvorgang beteiligten Stirnfräserschneiden mindestens teilweise mit Spanbrechernuten versehen, um zu verhindern, daß sich im Schnittbereich des Werkzeugs ein Span verklemmt und zum Verlaufen der Bohrung führt.

Der in der Zeichnung der US-PS 4 651 374 gezeigte Gewindefräser weist ferner mehr Spannuten und somit Gewindefräserschneiden als stirnseitige Bohrerschneiden auf. Aus diesem Grund müssen die nicht in einer Bohrerschneide auslaufenden Gewindefräserschneiden gegenüber der Werkzeugspitze zurückversetzt sein, wobei nur jene Gewindefräserschneiden den unteren Gewindeauslauf schneiden können, die in Bohrerschneiden einmünden. Hierdurch wird der Gekindeauslauf unsauber.

Der erfindungsgemäße Gewindefräser dagegen kann gemäß einer weiteren, bevorzugten Ausgestaltung mehr als zwei Stirnschneiden und vorzugsweise drei oder vier Stirnschneiden aufweisen, so daß sich
die Gewindefräserschneiden jeweils bis zu einer Stirnfräserschneide erstrecken, so daß der Gewindeauslauf oder der Gewindefreistich ebenso sauber geschnitten wird wie alle übrigen Abschnitte des hergestellten Innengewindes.

Wie oben beschrieben, ist das Zurücklegen einer kreisförmigen Bahnkurve von 360 ° zum vollständigen Herstellens eines Gewindes ausreichend. Bevorzugt wird man diesen Winkel jedoch ein wenig überfahren, um eine besonders saubere Gewindeausführung zu erreichen.

Die axiale Länge der Gewindefräserschneiden ist bevorzugt mindestens gleich der Gewindetiefe des herzustellenden Bohrlochs.

Das erfindungsgemäße Werkzeug kann auch zur Herstellung eines mehrgängigen Gewindes verwendet werden.

Das erfindungsgemäße Werkzeug kann nicht nur zur Herstellung einer Sackbohrung, sondern wie das bekannte Werkzeug auch zum Herstellen einer Gewinde-Durchgangsbohrung verwendet werden.

Der Gegenstand der Erfindung wird anhand der beigefügten, schematischen Zeichnung beispielsweise noch näher erläutert; in dieser zeigt:
- Fig. 1: die Spitze des gattungsbildenden Gewindefräsers,
- Fig.2: die Spitze eines erfindungsgemäßen Gewindefräsers,
- Fig. 3: den Querschnitt eines mit dem erfindungsgemäßen Gewindefräser hergestellten Gewinde-Sacklochs, und
- Fig. 4: die Seitenansicht eines erfindungsgemäßen Gewindefräsers.

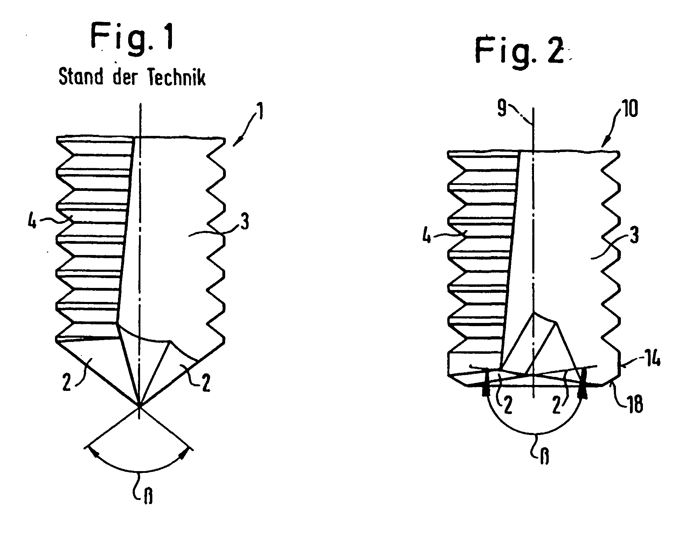

In Fig. 1 ist ein bekannter Gewindefräser 1 dargestellt, mit einer Bohrerspitze, die von zwei Bohrerschneiden 2 gebildet sind, die miteinander einen Winkel β einschließen, der deutlich kleiner ist als 180° und etwa 120° betragen kann.

Breite Spannuten 3 trennen die Schneiden 2 in Umfangsrichtung voneinander und führen spiralig an dem in der Zeichnung nicht dargestellten Schaft des Fräsers nach oben, um die beim Schnittvorgang während des Bohrens anfallenden Späne zu entfernen.

Der Umfangsbereich des Schaftes, der zwischen den Spannuten 3 liegt, weist hinterschnittene Schneidstollen 4 auf, die sich in Umfangsrichtung erstrecken. Die Länge der Schneidstollen 4 in Umfangsrichtung ist verhältnismäßig gering.

Der Hinterschliff der Schneidstollen 4 bewirkt, daß diese bei rotierendem Werkzeug selbst dann nicht klemmen, wenn dieses pro Umdrehung des Werkzeugs um das Maß einer Steigung angehoben wird.

Bei der in Fig. 2 gezeigten Ausführungsform der Erfindung weist der gezeigte Gewindefräser 10 eine flache Hohlspitze auf, wobei der zwischen den Stirnfräserschneiden 2 gebildete Winkel β ein wenig größer ist als 180°.

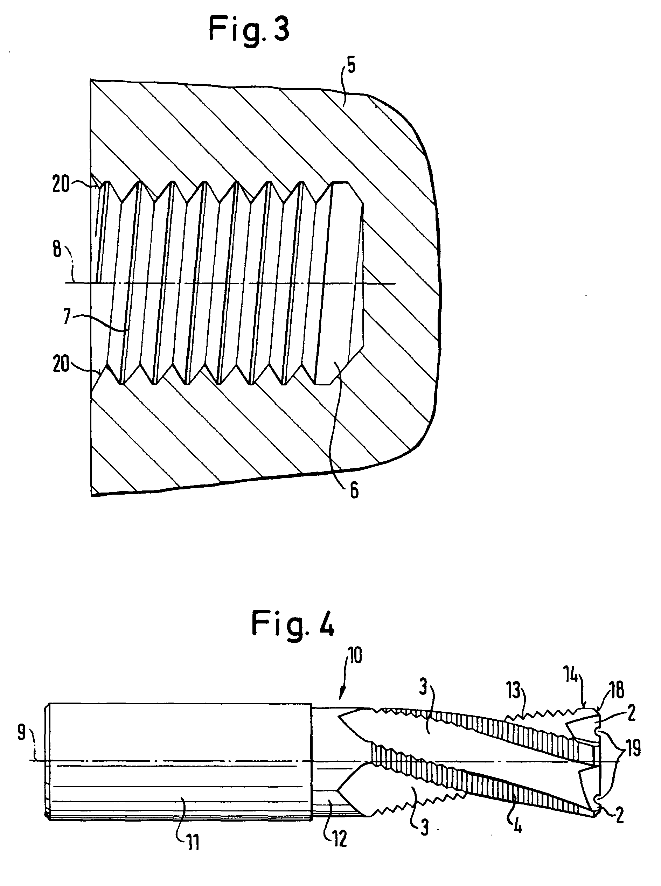

Ferner weist der in Fig. 2 gezeigte Stirnfräser anstelle der ein bis zwei untersten Gewindestollen eine Umfangsschneide 14 auf, die dazu dient, für einen Freistich 6 (Fig. 3) zu sorgen.

Die radial hinterschliffene Fase 18 dient zur Erzeugung eines Kantenbruches vor dem Bohrund Gewindefräsvorgang. Damit wird ein qualitativ hochwertiges gratfreies Gewinde garantiert.

In Fig. 3 ist ein durch einen Gewindefräser, wie er in Fig. 2 gezeigt ist, hergestelltes Gewinde-Sackloch gezeigt, das in einem Material 5 ausgebildet ist und eine Mittelachse 8 sowie ein Innengewinde 7 aufweisen soll, welches seinerseits am flachen Bohrlochende einen Freistich 6 und am entgegengesetzten Gewindeeinlauf einen Kantenbruch 20 aufweist.

Das in Fig. 3 gezeigte Gewinde-Sackloch wird durch ein Werkzeug der Fig. 2 auf die folgende Weise hergestellt:
Zunächst wird die Werkzeug-Längsachse 9 auf die Achse 8 der beabsichtigten Bohrung ausgerichtet; dem Gewindefräser wird längs einer Achse 9 gegen das Material 5 ein Vorschub verliehen, wobei die Stirnfräserflächen 2 das Material abtragen und die Späne durch die Spannuten 3 nach außen befördert werden.

Zunächst wird maximal so tief gebohrt, wie dies der axialen Länge des Kantenbruches 20 entspricht.

Nun wird das Werkzeug mit seiner Achse 9 radial soweit versetzt, daß der gewünschte Durchmesser des Kantenbruches 20 entsteht. Eine Kreisbewegung um 360° reicht aus, um den Kantenbruch 20 zu erzeugen.

Danach wird das Werkzeug wieder auf die Bohrlochachse 8 gefahren.

Nun beginnt der eigentliche Bohrvorgang.

Dem Gewindefräser wird erneut längs seiner Achse 9 gegen das Material 5 ein Vorschub verliehen, wobei die Stirnschneiden 2 das Material abtragen und die Späne durch die Spannuten nach außen befördern.

Bei Erreichen der vorgesehenen Bohrtiefe ist der Bohrlochgrund bei Verwendung des Werkzeugs der Fig. 2 mit einer leichten kegeligen Erhebung versehen.

Nun wird die Drehung des Werkzeugs beibehalten oder so verändert, daß die optimale Schnittgeschwindigkeit der Schneidstollen 4 erreicht wird.

Dann wird das Werkzeug mit seiner Achse 9 senkrecht zur Bohrlochachse 8 gegenüber dieser um ein solches Maß versetzt, daß das Zweifache dieses Maßes zuzüglich dem Werkzeug-Außendurchmesser etwa dem Gewinde-Nenndurchmesser entspricht. Hierbei arbeiten sich die Schneidstollen 4 und die Umfangsschneiden 14 in das Material 5 hinein.

Ist der gewünschte Abstand zwischen der Bohrlochachse 8 und der Werkzeugachse 9 erreicht, dann wird die Werkzeugachse 9 auf einer kreisförmigen Bahnkurve über mindestens 360° bewegt; gleichzeitig wird das Werkzeug 10 um das Maß der Steigung angehoben. Hierbei wird das Innengewinde 7 mit dem gewünschten Durchmesser gefräst.

Das Werkzeug muß eine Kreisbahn von mindestens 360° zurücklegen; diese Kreisbahn sollte jedoch nicht wesentlich größer sein, da sonst der von den Umfangsflächen 14 erzielte Freistich 6 zu lang ist.

Der Gewindefräser kann als Zwei-, Drei- oder Mehrschneider (mit vier oder mehr Schneiden) ausgebildet sein, wobei bei Mehrschneidern zweckmäßigerweise nicht alle Stirnschneiden am Bohrvorgang beteiligt sind; in der Regel sollen nur zwei oder drei Schneiden in Eingriff stehen. Die übrigen Schneiden sind axial leicht zurückgesetzt, wobei das Zurücksetzen innerhalb der Umfangsschneiden 14 vorgenommen werden muß, so daß eine qualitative Beeinträchtigung des bearbeiteten Gewindes ausgeschlossen ist.

In Fig. 4 ist ein Gewindefräser mit vier Schneiden 2 und vier Spannuten 3 gezeigt. Bei dem gezeigten Werkzeug sind alle vier Stirnschneiden 2 gleich breit.

Es ist jedoch auch möglich, nur zwei der Stirnschneiden 2 so auszubilden, daß sie beim Bohrvorgang schneiden, und die beiden anderen Stirnschneiden axial ein wenig zurückzuversetzen. In diesem Fall ist es zweckmäßig, jene Spannuten 3, die den jeweils beim Bohrvorgang schneidenden Stirnschneiden 2 zugeordnet sind, breiter auszubilden als die anderen Spannuten 3, die lediglich die beim Gewindefräsvorgang anfallenden Späne abzuführen haben.

Ferner sind zwei der Stirnschneiden 2, und zwar jene, die am Bohrvorgang beteiligt sind, mit Aussparungen 19 versehen, die Spanbrecher bilden.

Die Stirnzähne 2 sind an ihrem umfangsseitigen Ende mit einer radial hinterschliffenen Fase 18 versehen, die das Anbringen eines Kantenbruches 20 zu Beginn der Bearbeitung ermöglicht. Außerdem wird durch die Fase 18 die Lebensdauer des Werkzeugs erhöht.

Im übrigen weist das gezeigte Werkzeug wie auch das in Fig. 2 gezeigte Werkzeug Umfangsschneiden 14 zum Erzeugen des Freistiches 6 sowie Schneidstollen 4 zum Fräsen des Innengewindes 7 auf, die jeweils von Gewinderillen 13 getrennt sind.

Der Werkzeugschaft 11 ist zum Einspannen des Werkzeugs 10 in eine Werkzeugmaschine eingerichtet und kann ein Gewinde, eine Spannfläche, eine Spannschräge oder sonstige, auf dem Gebiet der Werkzeugmaschinen übliche Ausbildungen zum Einspannen aufweisen.

Der Eingriffsabschnitt 12 weist einen gegenüber dem Schaft 11 gleichen oder kleineren Außendurchmesser auf.

Der Gewindefräser kann aus Schnellarbeitsstahl, Hartmetall oder einem anderen, geeigneten Schneidstoff hergestellt sein.

## Patentansprüche

1. Verfahren zum Einbringen einer Gewinde-Sackbohrung in ein Werkstück mittels eines Gewindefräsers (10) mit einem länglichen Schaft (11), der an seinem Umfang mindestens eine mit Schneidstollen (4) versehene Gewindefräserschneide aufweist und an seinem unteren Ende als Stirnfräser ausgebildet ist, dessen Schneiden (2) zum Schaft (11) hin einen Stirnwinkel (β) einschließen, der größer als 180° ist wobei der Gewindefräser (10)
- in eine Drehung um die Längsachse (9) des Schaftes (11) versetzt wird,
- zum Einbringen einer Ausgangsbohrung in Richtung der Längsachse (9) in das Werkstück hinein vorwärtsbewegt wird,
- nach Erreichen seiner Bohrtiefe unter Beibehaltung seiner Drehung seitlich versetzt wird,
- unter Beibehaltung seiner Drehung rückwärts bewegt wird, dabei mindestens eine wendelförmige Umlaufbewegung durchführt und hierbei längs der Umfangswand der Ausgangsbohrung mit den Schneidstollen (4) ein Muttergewinde in das Werkstück schneidet, wobei der kleinste Durchmesser des Muttergewindes nicht kleiner ist als der Durchmesser der Ausgangsbohrung, und
- nach Erreichen seiner größten Bohrtiefe und Beenden seiner Vorwärtsbewegung und vor irgendeiner Rückwärtsbewegung unmittelbar seitlich so lange in das Material (5) des Werkstücks hinein versetzt wird, bis er den Umfang des beliebig großen Muttergewindes erreicht hat.

2. Gewindefräser zur Durchführung des Verfahrens nach Anspruch 1, mit einem länglichen Schaft (11), der an seinem Umfang mindestens eine, mit Schneidstollen (4) versehene Gewindefräserschneide aufweist und an seinem unteren Ende als Stirnfräser ausgebildet ist, dessen Schneiden (2) zum Schaft hin zur Bildung einer Hohlspitze am unteren Ende des Gewindefräsers (10) einen Stirnwinkel (β) einschließen, der größer als 180° ist.

3. Gewindefräser nach Anspruch 2, **dadurch gekennzeichnet, daß** die oder jede Gewindefräserschneide am unteren Ende des Gewindefräsers (10) einen Endstollen mit einer länglichen Umfangsschneide (14) aufweist.

4. Gewindefräser nach Anspruch 3, **dadurch gekennzeichnet, daß** am Übergang zwischen Stirnfräserschneide (2) und Umfangsschneide (14) ein radial hinterschliffener Kantenbruch (18) vorgesehen ist.

5. Gewindefräser nach einem der Ansprüche 2 bis 4, **dadurch gekennzeichnet, daß** mindestens zwei Stirnfräserschneiden (2) vorgesehen sind.

6. Gewindefräser nach einem der Ansprüche 2 bis 5, **dadurch gekennzeichnet, daß** bevorzugt bei einem Gewindefräserdurchmesser von mehr als 20 mm mindestens eine der am Bohrvorgang beteiligten Stirnfräserschneiden (2) Spanbrechernuten (19) aufweist.

## Claims

1. Process for inserting a threaded drill-hole in a workpiece by means of a thread milling cutter (10) with a long shaft (11), which possesses at least one thread cutting blade provided with cutting flutes (4) on its periphery and which at its lower end is designed as a face milling cutter, the blades (2) of which enclose a transverse angle (β) to the shaft (11) of greater than 180°, in which the thread milling cutter (10)
-- is rotated around the longitudinal axis (9) of the shaft (11),
-- is moved forwards into the workpiece in the direction of the longitudinal axis (9) in order to insert an initial drill hole,
- after reaching its drilling depth is moved sideways whilst maintaining its rotation,
- is moved backwards while still maintaining its rotation, and in the process carries out at least one spiral revolution thereby cutting a female thread in the workpiece around the peripheral wall of the initial drill hole with the cutting flutes (4), whereby the smallest diameter of the female thread is not smaller than the diameter of the initial drill hole, and
- after reaching its greatest drilling depth and completing its forward movement and before any backward movement is moved immediately sideways into the material (5) of the workpiece, until it has reached the desired circumference of the female thread.

2. Thread milling cutter for carrying out the process according to Claim 1, with a long shaft (11), which on its periphery possesses at least one thread cutting blade provided with cutting flutes (4) and which at its lower end is designed as a face milling cutter, the blades (2) of which enclose a transverse angle (β) to the shaft greater than 180°, thereby forming a hollow tip at the lower end of the thread milling cutter (10).

3. Thread milling cutter according to Claim 2, **characterized in that** the one or more thread cutting blades possesses an end flute with a longitudinal peripheral blade (14) at the lower end of the thread milling cutter (10).

4. Thread milling cutter according to Claim 3, **characterized in that** a radially relief-ground chamfer (18) is provided at the junction between the face milling blade (2) and the peripheral blade (14).

5. Thread milling cutter according to one of Claims 2 to 4, **characterized in that** at least two face milling blades (2) are provided

6. Thread milling cutter according to one of Claims 2 to 5, **characterized in that** for a thread milling cutter diameter of more than 20 mm, preferably at least one of the face milling blades (2) involved in the drilling process possesses chip breaking grooves (19).

## Revendications

1. Procédé pour réaliser un trou borgne taraudé dans une pièce à usiner, à l'aide d'une fraise de taraudage (10) avec une tige allongée (11), qui présente sur son pourtour au moins un tranchant de fraise de taraudage muni de cannelures de coupe (4), et est formée à son extrémité inférieure en fraise frontale, dont les tranchants (2) forment avec la tige (11) comportent un angle frontal (β) qui dépasse 180°, dans lequel la fraise de taraudage (10) :
- est déplacée dans en rotation autour de l'axe longitudinal (9) de la tige (11);
- est déplacée vers l'avant dans la direction de l'axe longitudinal (9) pour réaliser un trou de départ à l'intérieur de la pièce à usiner;
- après avoir atteint sa profondeur de forage, est déplacée latéralement tout en conservant sa rotation;
- tout en conservant sa rotation, est déplacée vers l'arrière, en exécutant au moins un mouvement de rotation de forme hélicoïdale et, de ce fait, découpe grâce aux cannelures de coupe (4) un filet femelle dans la pièce à usiner le long de la paroi circonférentielle du trou de départ le plus petit diamètre du filetage femelle n'étant pas plus petit que le diamètre du trou de départ, et
- après avoir atteint sa plus grande profondeur de forage et terminé son mouvement vers l'avant, et avant un quelconque mouvement vers l'arrière, est directement déplacée latéralement dans le matériau (5) de la pièce à usiner,jusqu'à ce qu'elle ait atteint le pourtour du filetage femelle de dimension quelconque.

2. Fraise de taraudage pour la mise en oeuvre du procédé selon la revendication 1, avec une tige allongée (11) qui présente sur son pourtour au moins un tranchant de fraise de taraudage munie de cannelures de coupe (4), et est formée en fraise frontale à son extrémité inférieure, dont les tranchants (2) forment avec la tige (11), un angle frontal (β) qui est supérieur à 180° pour la formation dune pointe creuse à l'extrémité inférieure de la fraise de taraudage (10).

3. Fraise de taraudage selon la revendication 2, **caractérisée en ce que** le ou chaque tranchant de fraise de taraudage présente à l'extrémité inférieure de la fraise de taraudage (10) une cannelure d'extrémité avec un tranchant périphérique allongé (14).

4. Fraise de taraudage selon la revendication 3, **caractérisée en ce que**, à la transition entre le tranchant de fraise frontal (2) et le tranchant périphérique (14), il est prévu une rupture d'arête (18) radiale en dépouille.

5. Fraise de taraudage selon l'une des revendications 2 à 4, **caractérisée en ce qu'**au moins deux tranchants de fraise frontale (2) sont prévus.

6. Fraise de taraudage selon l'une des revendications 2 à 5, **caractérisée en ce que**, de préférence, pour un diamètre de fraise de taraudage de plus de 20 mm, au moins un des tranchants de fraise frontale (2) concernés par le processus de forage présente des rainures de rupture de copeaux (19).
